# EUROPEAN PATENT APPLICATION

(11) **EP 2 644 256 A1**
(43) Date of publication of application: **02.10.2013**
(21) Application number: 12162635.2
(22) Date of filing: 30.03.2012
(51) Int. Cl.: B01D 53/62

(54) **Method and apparatus for efficient carbon dioxide capture**

(71) Applicant: Alstom Technology Ltd, 5400 Baden (CH)
(72) Inventor: Stallmann, Olaf, 55270 Essenheim (DE)

(57) **Abstract**

A method and apparatus to capture CO₂ from flue gases of gas plant by transmitting a first portion **36** of the flue gases to calciner **32** as shown in Fig. 2. Portion **36** may be heated via heat exchanger **60** and may be further heated via combustion chamber **64**. Heat of portion **36** is transferred to the calciner **32** via heating surface **70**, providing temperatures sufficient to calcinate a carbonated absorbent. Absorbent is recovered and transmitted to carbonator **28**. First portion **36** and second portion **38** are injected into carbonator **28** for CO₂ capture.

## Description

### FIELD

The present disclosure relates to the reduction of carbon dioxide (CO₂) emissions from flue gases. More particularly, it relates to an efficient method and apparatus to capture CO₂ from flue gases of a while simultaneously reducing the energy and capital expenditures necessary for CO₂ capture.

### BACKGROUND

Certain processes, such as combustion of carbon containing fuels, produce gaseous emissions of CO₂. CO₂ has been identified as a "greenhouse" gas, which appears to contribute to global warming. Because of its status as a "greenhouse" gas, technologies have been developed to prevent large quantities of CO₂ from being released into the atmosphere from the use of fossil fuels. The technologies generally fall into one of three areas: post combustion capture (PCC), where CO₂ is removed after combustion; pre-combustion (PC), where fuel is converted before combustion; and oxy-firing combustion where, fuel is burned in enriched or pure oxygen instead of ambient air.

Methods for PCC removal of CO₂ from existing gas streams include chemical absoiption/adsorption with particular solvent systems, membrane separation, cryogenic fractionation, and/or adsorption using molecular sieves. CO₂ can be captured from a flue stream using a CO₂ absorbent by the following reaction:

Absorbent + CO₂ --> Carbonated Absorbent (carbonation) - exothermic

The absorbent is placed in contact with the flue stream containing CO₂ in a reactor (carbonator), wherein the CO₂ is absorbed, forming a carbonated absorbent. The carbonated absorbent may be then heated in a second reactor (calciner), releasing the CO₂ for capture and processing, and regenerating absorbent by the following reaction:

Carbonated Absorbent-->Absorbent + CO₂ (calcination) - endothermic

This process is considered a regenerative process because the absorbent material is, to a large extent, not consumed and may be continually regenerated and cycled through the system.

US Patent No. 6,737,031 discloses an absorbent looping method employing lime (CaO) as the absorbent wherein the CaO is produced in a circulating fluidized bed hearth which has been injected with calcium carbonate (CaCO₃). The CaO is used, in part, to capture CO₂ from combustion via carbonation, forming CaCO₃. The CaO may be continually regenerated from the CaCO₃ via calcination.

One of the difficulties with absorbent looping is the substantial energy and capital expenditures incurred to regenerate absorbent after carbonation so that absorbent may be recycled back for additional absorption of CO₂. For example, when CaO is the absorbent, recovered CaCO₃ is calcinated in a reactor above 850° C to remove absorbed CO₂ and reform CaO. The CO₂ removed during calcination may then be recovered and captured for proper treatment. Thus, while absorbent looping may be used to capture CO₂, it requires substantial cost and energy to continually regenerate absorbent. Accordingly, there is a need for an improved method and apparatus for more efficient regeneration of CO₂ absorbents.

### SUMMARY

According to aspects illustrated herein, there is provided a method for carbon dioxide (CO₂) capture from flue gases of a gas plant including, transmitting a first portion of the flue gases to a heating surface of a calciner, calcining a carbonated absorbent in the calciner, separating from a flue stream of the calciner an absorbent, transmitting absorbent to a carbonator, transmitting the first portion of the flue gases from the heating surface of the calciner to the carbonator, transmitting a second portion of the flue stream to the carbonator, absorbing CO₂ from the flue gases by placing the flue gases in contact with the absorbent within the carbonator such that carbonated absorbent is formed, separating carbonated absorbent from a flue stream of the carbonator, and transmitting the carbonated absorbent to the calciner. Heat present in the first portion of the flue stream provides partial heat energy for a calcination reaction in the calciner. The first portion of the flue stream is further heated via a first heat exchange with gases exiting the heating surface of the calciner. The first portion of the flue stream is further heated by a combustion chamber to acquire temperatures necessary for calcination. Heat is transferred from the first portion of the flue stream to the calciner via the heating surface of the calciner.

According to other aspects illustrated herein, there is provided a method to reduce carbon dioxide (CO₂) emissions, including transferring heat contained in hot off gases to a calciner, calcining a carbonated absorbent in the calciner, transmitting calcinated absorbent from the calciner to a carbonator, transmitting the off gases to the carbonator, and capturing CO₂ from the off gases by placing the off gases in contact with the calcinated absorbent such that carbonation occurs forming carbonated absorbent.

According to other aspects illustrated herein, there is provided an apparatus for CO₂ capture from flue gases, which includes a calciner, a heating element attached to the calciner, a flue stream configured to transmit flue gases to the heating element, and a carbonator configured to receive absorbent from the calciner. The heating element is configured to externally transfer heat from the flue gases to the calciner. Calcinated absorbent is created via calcination of carbonated absorbent in the calciner. Flue gases are transmitted to the carbonator. CO₂ is captured from the flue gases in the carbonator by placing the flue gases in contact with calcinated absorbent.

The above described and other features are exemplified by the following figures and detailed description.

### BRIEF DESCRIPTION OF THE DRAWINGS

Referring now to the figures, which are exemplary embodiments, and wherein the like elements are numbered alike:

Figure 1 is a schematic flow diagram of a typical conventional gas plant.

Figure 2 is a schematic flow diagram of an exemplary embodiment of the present disclosure.

### DETAILED DESCRIPTION

According to an exemplary embodiment of the present disclosure, a method is provided to capture CO₂ from flue gases by transmitting a first portion of flue gases to a calciner and a second portion of flue gases to a carbonator. Carbonated CO₂ absorbent is calcinated in the calciner and absorbent is separated from a flue stream of the calciner and transmitted to the carbonator where the absorbent is placed in contact with the flue gases for absorption of CO₂ via carbonation. Heat energy required to calcinate the carbonated absorbent in the calciner is provided, in part, by the flue gases, which may be of various temperatures depending upon the plant and/or process the flue gases are generated in. The flue gases used to moderate hot side temperatures of the calciner may be further heated via a heat exchange with gases exiting a heating surface of the calciner. Any additional heat necessary to reach sufficient temperatures for calcination may be provided by a combustion chamber. The flue gases are then transmitted such that they externally heat the calciner, providing heat for calcination. After heating the calciner, the flue gases are transmitted to the carbonator for CO₂ absorption.

According to an exemplary embodiment of the present disclosure, an apparatus is provided having a calciner, a heating element attached to the calciner, a flue stream configured to transmit to the heating element and a carbonator configured to receive absorbent from the calciner. Heat in the flue stream is transferred to the heat element such that the calciner is heated for calcination. CO₂ is captured from the flue gases in the carbonator by placing the flue gases in contact with calcinated absorbent formed in the calciner.

Embodiments of the present disclosure reduce the energy and capital costs of capturing CO₂ from flue gases by exposing CO₂ contained in the flue gases to an absorbent which is created from a calcination process with heat supplied, in part, from the flue gases. By transferring heat from the flue gases to a calciner, ongoing calcination of carbonated absorbent for return as absorbent to a carbonator may be accomplished with reduced energy consumption. Unconditioned temperatures of the flue gases are utilized to avoid unnecessary cooling or heating. The flue gases treated by absorbent are reduced in carbon dioxide content suitable for release into the atmosphere and gases from the flue stream of the calciner are primarily CO₂ thereby simplifying the process of capture and storage of the CO₂. Thus, embodiments of the present disclosure substantially reduce the energy and capital costs typically associated with CO₂ capture using a CO₂ absorbent.

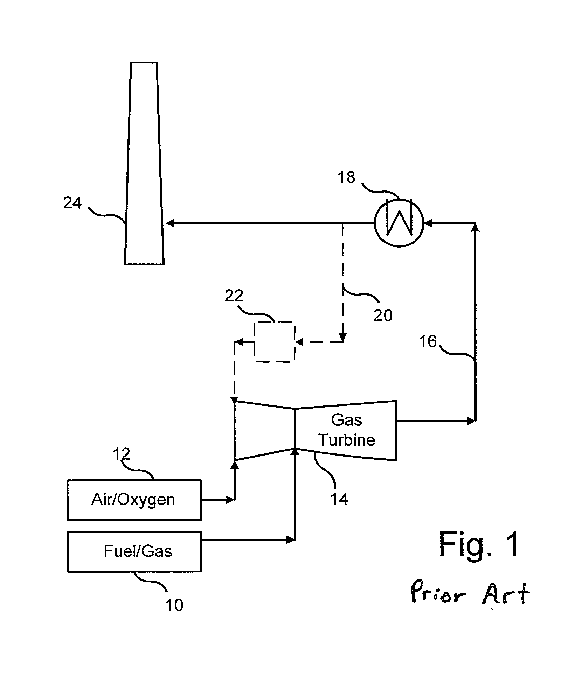

Referring to Fig. 1, which generally shows a typical conventional gas plant having a gas turbine **14** supplied by a fuel **10** and air **12.** Alternatively, enriched oxygen gas may be used instead of air. Off gases **16** of the gas turbine **14** are transmitted to heat exchanger **18** for heat recovery prior to transmission to a stack **24** and venting to the atmosphere. Typically there may also be flue gas conditioning equipment between the gas turbine **14** and the stack **24.** Optionally, a portion **20** of the off gases **16** may be retuned to the gas turbine **14** which returned portion **20** may be first cooled in a cooler **22,** which may be a direct contact cooler. Depending on the plant or industrial process, off gases **16** will typically have a temperature of about 650°C. Other ranges are possible depending a plant's combustion technology or industrial processes generating the off gases. Although heat is partially recovered for energy production in heat exchanger **18,** a substantial portion of heat is lost through cooling or upon exit through stack **24.** The present disclosure provides a method and apparatus to utilize heat from the off gases in absorbent production, which results in reduced energy demands on CO₂ capture utilizing absorbents.

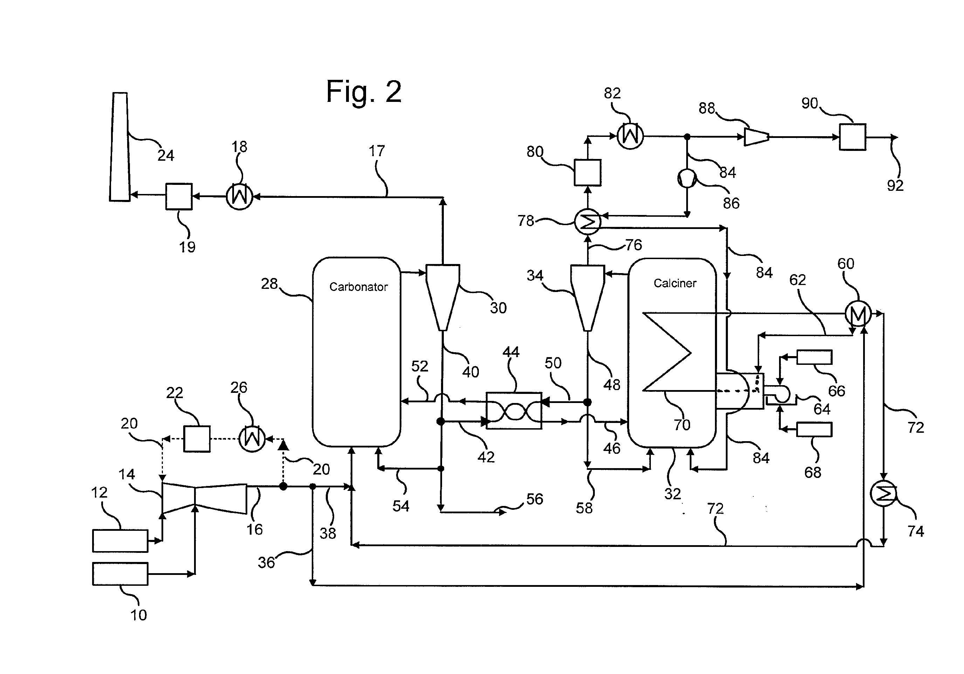

Referring to the exemplary embodiment shown in Fig. 2, flue gases **16** from the gas turbine **14** are split, with a first portion **36** being transmitted to first heat exchanger **60** such that first portion **36** is further heated by exit gases **72** leaving a heating surface **70** of a calciner **32.** The exemplary embodiment shown in Fig. 2 shows flue gases from gas turbine **14,** however, flue gases from other combustion plants or industrial processes are contemplated by the present disclosure. The flue gases **16** and first portion **36** will typically be approximately 650°C, depending on the combustion plant or industrial process producing the flue gases **16.** First portion **36** may generally be heated to approximately 850°C via heat exchange in first heat exchanger **60.** First portion **36** may be further heated via combustion chamber **64** supplied by fuel **66** and air **68.** Combustion chamber **64** may be a direct fire furnace. First portion **36** may be heated by combustion chamber **64** to approximately 1050°C, depending the temperatures required for calcination of the absorbent. Typically, furnace **64** may be utilized to increase a temperature of first portion **36** by 150°C to 200°C providing sufficient temperature of portion **36** to heat calciner **32** to calcination temperatures. As a further alternative, first portion **36** may also be heated by flue stream **76** of the calciner **32.**

After heating, first portion **36** may be transmitted to heating surface **70** of calciner **32** such that first portion **36** externally provides heat to the calciner **32.** The calciner **32** is heated to a temperature sufficient to permit calcination of an absorbent within the calciner **32,** which may vary depending on the absorbent chosen. For lime/limestone, a target temperature of calciner **32** typically would be above 850°C. Heat input from first portion **36** to calciner **32** is indirect via heat surface **70,** which may be heat surfaces installed in calciner **32** or alternative indirect heating systems such as rotary kilns or heated bubbling beds. As a further alternative, combustion chamber **64** may be configured such that calciner **32** is located inside of combustion chamber **64.** In the alternative embodiment, combustion chamber **64** may be a gas boiler. First portion **36** exits heat surface **70** and transmits back to first exchanger **60.** From first exchanger **60,** the now partially cooled first portion **72** may be transmitted to a carbonator **28.** Optionally, partially cooled first portion **72** may be first transmitted to second heat exchanger **74** to recover heat for steam production prior to transmission to the carbonator **28.** A second portion **38** of the flue gases **16** may be transmitted directly to the carbonator **28.**

Solids present in a flue stream of the calciner **32** are separated in first solid separator **34,** which may be cyclone, and transmitted **48** such that portion **58** of solids are returned to the calciner **32** and portion **50** of solids **48** are forwarded to solid/solid heat exchanger **44.** In solid/solid heat exchanger **44,** portion **50** may transfer heat to solids **42** from the carbonator **28.** Portion **50** is further transferred 52 to the carbonator **28.** Generally, portion **50/52** will include a substantial concentration of calcinated absorbent.

In the carbonator **28,** calcinated absorbent may be placed in contact with flue gases **16,** including returned first portion **72** and second portion **38,** so as to capture CO₂ contained in flue gases **16** by carbonization. Solids present in a flue stream of the carbonator **28** may be separated in second solid separator **30,** which may be a cyclone. Exiting second solid separator **30,** flue stream **17** of the carbonator **28** will have substantially reduced CO₂ content and may be transmitted to stack **24** and vented to the atmosphere. Prior to venting, flue stream **17** may be transmitted to heat exchanger **18** for heat recovery and/or gas conditioning equipment **19.**

Solids **40** from second solid separator **30** may be transmitted in pant **54** back to the carbonator **28** allowing additional calcinated absorbent to interact with flue gases **16.** A second portion **56** may be transmitted such that heat may be recovered from second portion **56** and the solids, which may contain a mix of carbonated absorbent and calcinated absorbent, may be recovered for future uses. If the absorbent utilized is lime, second portion **56,** after heat recovery, will typically be a mixture of lime and limestone. A third portion **42** of solids **40** may be transmitted to solid/solid heat exchanger **44** such that third portion **42** may absorb heat from solids **50.** Solids of third portion **42** typically may contain a substantial concentration of carbonated absorbent. By transferring heat from solids **50** from the calciner to solids **42,** which are then further transmitted **46** to the calciner **32,** the temperature of the carbonated absorbent is increased, thereby decreasing heat demand necessary to calcinate the absorbent in the calciner **32.**

After solids are removed from a flue stream of the calciner **32** in first solid separator **34,** flue stream **76** may be transmitted for CO₂ capture and processing. Flue stream **76** will typically contain a high concentration of CO₂ from the calcination process. The high concentration of CO₂ reduces the energy demands and difficulties of capturing the CO₂. Because the calciner **32** is heated via first portion **36** externally instead of injecting first portion **36** into the calciner **32,** the components of first portion **36** are not introduced to the calciner, preventing flue stream **76** from being diluted by inerts, such as nitrogen, that may be found in flue gases **16** and first portion **36.** Moreover, CO₂ added to first portion **36** by combustion chamber **64,** as a result of the combustion process in combustion chamber **64,** is captured in the carbonator **28** when first portion **36** is returned **72** to the carbonator **28.**

Prior to transmission to compressor **88,** gas processing unit **90** and CO2 capture **92,** flue stream **78** may be transmitted to flue gas conditioning equipment **80** and heat exchanger **82** permitting heat recovery for steam production. Optionally, a portion **84** of flue stream **76** may be recirculated via recirculation fan **86** such that portion **84** transmits to heat exchanger **78** and receives heat transfer from flue stream **76.** Portion **84** may further be transmitted to calciner **32** for fluidization purposes, degassing of absorbent, and/or temperature regulation.

The integration of hot off gases to externally heat a calciner reduces the energy requirements necessary for the production of CO₂ absorbent to treat the off gases. The method utilizes heat present in the off gases as a partial source of calcination heat yet prevents the off gases from diluting the CO₂ stream of the calciner by having the off gases heat the calciner externally. Thus, aspects of the present disclosure provide an integrated process for the treatment of existing CO₂ emissions while minimizing the impact of additional CO₂ absorbent generation and substantially reducing the capital and energy requirements typically required for the regeneration of a CO₂ absorbent of a regenerative absorbent cycle.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teaching of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for carbon dioxide (CO₂) capture from flue gases of a gas plant, comprising:
transmitting a first portion of the flue gases to a heating surface of a calciner;
calcining a carbonated absorbent in the calciner;
separating from a flue stream of the calciner an absorbent;
transmitting absorbent to a carbonator;
transmitting the first portion of the flue gases from the heating surface of the calciner to the carbonator;
transmitting a second portion of the flue gases directly to the carbonator;
absorbing CO₂ from the flue gases by placing the flue gases in contact with the absorbent within the carbonator such that carbonated absorbent is formed;
separating carbonated absorbent from a flue stream of the carbonator;
transmitting the carbonated absorbent to the calciner;
wherein heat present in the first portion of the flue stream provides partial heat for a calcination reaction in the calciner;
wherein the first portion of the flue stream is further heated via a first heat exchange with gases exiting the heating surface of the calciner;
wherein the first portion of the flue stream is further heated by a combustion chamber to acquire temperatures necessary for calcination;
wherein heat is transferred from the first portion of the flue stream to the calciner via the heating surface of the calciner.

2. The method of claim 1, further comprising: transmitting a flue stream of the carbonator to a venting stack.

3. The method of claim 1, further comprising: transmitting a flue stream of the calciner to a gas processing unit.

4. The method of claim 3, further comprising, recycling a portion of the flue stream of the calciner to the calciner.

5. The method of claim 1, wherein the absorbent is lime.

6. The method of claim 4, wherein the calciner is a fluidized bed.

7. The method of claim 1, wherein the calciner has indirect heating surfaces installed in the calciner.

8. The method of claim 1, wherein the calciner is located inside the combustion chamber.

9. A method to reduce carbon dioxide (CO₂) emissions, comprising:
transferring heat contained in hot off gases to a calciner;
calcining a carbonated absorbent in the calciner;
transmitting calcinated absorbent from the calciner to a carbonator;
transmitting the off gases to the carbonator;
capturing CO₂ from the off gases by placing the off gases in contact with the calcinated absorbent such that carbonation occurs forming the carbonated absorbent.

10. The method of claim 9, wherein the carbonated absorbent is calcium carbonate.

11. The method of claim 9, wherein the calciner is a fluidized bed reactor.

12. The method of claim 9, further comprising: preheating carbonated absorbent via heat exchange with calcinated absorbent from the calciner.

13. The method of claim 9, further comprising: transmitting the off gases to a first heat exchanger.

14. The method of claim 13, further comprising: heating the off gases in the first heat exchanger with exit gases of the calciner heating surface before transferring heat from the off gases to the calciner.

15. The method of claim 9, further comprising, heating the off gases via a combustion chamber before transferring heat from the off gases to the calciner.

16. An apparatus for CO₂ capture from flue gases, comprising:
a calciner;
a heating element attached to the calciner;
a flue stream configured to transmit flue gases to the heating element;
a carbonator configured to receive absorbent from the calciner;
wherein the heating element is configured to externally transfer heat from the flue gases to the calciner;
wherein calcinated absorbent is created via calcination of carbonated absorbent in the calciner;
wherein the flue gases are transmitted to the carbonator;
wherein CO₂ is captured from the flue gases in the carbonator by placing the flue gases in contact with calcinated absorbent.

17. The apparatus of claim 16, further comprising: a first heat exchanger configured to transmit heat from exit gases of the heating element to the flue gases prior to the flue gases contacting the heating element.

18. The apparatus of claim 16, further comprising: a combustion chamber configured to further heat the flue gases prior the flue gases contacting the heating element.

19. The apparatus of claim 16, further comprising: a combustion chamber configured such that the calciner is installed inside of the combustion chamber.

20. The apparatus of claim 19, wherein the combustion chamber is a gas boiler.
